# EUROPÄISCHE PATENTSCHRIFT

(11) **EP 2 069 766 B1**
(45) Veröffentlichungstag und Bekanntmachung des Hinweises auf die Patenterteilung: **11.09.2013**
(21) Anmeldenummer: 07818491.8
(22) Anmeldetag: 27.09.2007
(51) Int. Cl.: G01N 21/90, G01B 11/28, B07C 5/342, B29C 49/80

(54) **Inspektionsvorrichtung für Behältnisse**
Inspection device for containers
Dispositif d'inspection pour conteneurs

(30) Priorität: 05.10.2006 DE 102006047150
(43) Veröffentlichungstag der Anmeldung: 17.06.2009
(73) Patentinhaber: Krones Aktiengesellschaft, 93073 Neutraubling (DE)
(72) Erfinder: KWIRANDT, Rainer, 93092 Barbing (DE)
(74) Vertreter: Bittner, Bernhard
(86) Internationale Anmeldenummer: PCT/EP2007/008408
(87) Internationale Veröffentlichungsnummer: WO 2008/040487

(56) Entgegenhaltungen:
- EP-A- 0 387 930
- EP-A1- 0 045 407
- WO-A-02/054051
- DE-A1- 3 233 919
- DE-A1- 3 839 682
- DE-C1- 19 914 028
- JP-A- 57 064 153
- US-A- 5 923 419
- US-A- 6 061 125

## Beschreibung

Die vorliegende Erfindung bezieht sich auf eine Inspektionsvorrichtung für Behältnisse. Die Erfindung wird unter Bezugnahme auf Kunststoffflaschen oder Vorformlinge beschrieben, es wird jedoch darauf hingewiesen, dass die Erfindung auch bei anderen transparenten oder semitransparenten Behältnissen oder Hohlkörpern Anwendung finden kann. Derartige Inspektionsvorrichtungen sind aus dem Stand der Technik bekannt. In sogenannten Streckblasmaschinen ist es erforderlich, die jeweils hergestellten Behältnisse zu kontrollieren. Eine derartige Vorrichtung zur optischen Inspektion von Flaschen ist beispielsweise aus der DE 100 652 90 A1 bekannt. Insbesondere die Böden der Behältnisse sind dabei für eine Kontrolle sehr relevant, da sich hier beispielsweise eine Zentrierprüfung des Anspritzpunktes der Hohlkörper durchführen lässt. So wird beispielsweise in der DE 199 140 28 C1 eine Vorrichtung beschrieben, um die genaue Position des Anspritzpunktes bezüglich eines Behältnisses zu überprüfen. In der DE 10 2005 044 206 wird ein Verfahren zur Qualitätskontrolle eines streckgeblasenen Kunststoffbehälters beschrieben. Dabei wird die Dichte des Lichts zur Untersuchung der Behältnisböden verwendet.

Aus der DE 38 39 682 A2 ist ein Flaschenbodenprüfgerät bekannt. Dabei wird von einer Lichtquelle aus ein

Flaschenboden beleuchtet und mittels zwei Kameras ein Bild des Flaschenbodens aufgenommen.

Die US 6 061 125 A1 beschreibt eine Beleuchtungsvorrichtung zur Inspektion von Behältnissen. Dabei beleuchtet eine erste Beleuchtungseinrichtung das Behältnis direkt d. h. geradlinig wobei das Licht durch eine Streueinrichtung hindurch tritt und eine zweite Beleuchtungseinrichtung beleuchtet das Behältnis über einen Umlenkspiegel.

Die EP 0 387 930 A1 beschreibt eine gleichzeitige Doppelinspektion von Behältnissen. Dabei werden die Behältnisse von oben her beleuchtet und über ein Kamerasystem, welches ebenfalls oberhalb der Behältnisse angeordnet ist, werden die entsprechenden Bilder aufgenommen.

Die JP 57 064153 A beschreibt eine weitere Beleuchtungsvorrichtung für Behältnisböden. Dabei werden die Behältnisböden beleuchtet und mittels einer Kamera, welche oberhalb des Behältnisses angeordnet ist, werden die entsprechenden Bilder der Behältnisse aufgenommen.

Bekanntermaßen ist durch unterschiedliche Untersuchungsmethoden bzw. Strahlungsquellen eine Überprüfung der Behältnisse und insbesondere deren Böden im Hinblick auf unterschiedliche Kriterien möglich. Dabei tritt jedoch das Problem auf, dass in Streckblasmaschinen der Weg bzw. die Zeit, in der eine Inspektion möglich ist, sehr knapp ist, da sich in kurzem örtlichen bzw. zeitlichen Abstand an die Streckblasenmaschine weitere Baueinheiten wie eine Sterilisations- und/oder Füllstation anschließen. Zwischen den einzelnen Arbeitsstationen sind dabei Transferorgane in Form von Sternrädern und/oder Ketten mit geeigneten Halteeinrichtungen angeordnet und eine Kontrolle der Behältnisse bzw. deren Böden muss in dem kurzen Abschnitt zwischen der Streckblasmaschine und beispielsweise der unmittelbar nachfolgenden Maschine erfolgen. In der zur Verfügung stehenden Zeit muss daher eine Kontrolle der Behältnisse sowohl in Bezug auf Fehlerfreiheit (Risse, Blasen, Fremdkörper) als auch Fertigungsqualität (Materialverteilung, Wanddicke etc.) vorgenommen werden sowie eine Entscheidung ob ein bestimmtes Behältnis in die nächste Arbeitsstation des Herstellungsprozesses gelangt oder aussortiert wird. Dabei ist es bei den geforderten Maschinenleistungen von bis zu 60.000 Behältern/Stunde oft nicht möglich, innerhalb der kurzen Strecke zwei unterschiedliche Inspektionsvorrichtungen so anzuordnen, dass ausreichend Zeit zur Analyse und evtl. erforderlichen Ausscheidung von Behältnissen vor dem Eintritt in eine nachfolgende Behandlungseinrichtung verbleibt.

Der vorliegenden Erfindung liegt daher die Aufgabe zugrunde, eine Inspektionsvorrichtung zu schaffen, die eine vielseitigere Kontrolle der Behältnisse innerhalb annähernd gleicher oder kürzerer Zeit ermöglicht.

Dies wird erfindungsgemäß durch eine Vorrichtung nach Anspruch 1 sowie ein Verfahren nach Anspruch 11 erreicht. Vorteilhafte Ausführungsformen und Weiterbildungen sind Gegenstand der Unteransprüche.

Die erfindungsgemäße Inspektionsvorrichtung für transparente oder semitransparente Behältnisse weist eine erste Beleuchtungseinrichtung auf, die Licht mit ersten charakteristischen Eigenschaften auf den Boden des Behältnisses richtet. Daneben ist eine zweite Beleuchtungseinrichtung vorgesehen, welche Licht mit zweiten charakteristischen Eigenschaften, welche sich wenigstens teilweise von den ersten charakteristischen Eigenschaften unterscheiden, auf den Boden des Behältnisses richtet. Weiterhin ist wenigstens eine Bildaufnahmeeinrichtung vorgesehen, die wenigstens einen Anteil des auf den Boden des Behältnisses gerichteten und von diesem transmittierten Lichts aufnimmt.

Erfindungsgemäß beleuchtet die zweite Beleuchtungseinrichtung den Boden des Behältnisses indirekt. Unter einer indirekten Beleuchtung wird dabei verstanden, dass das von der zweiten Beleuchtungseinrichtung ausgehende Licht nicht auf direktem Wege und nicht mit einem geradlinigen Strahlengang auf den Boden des Behältnisses trifft, sondern zunächst auf ein weiteres Medium trifft und erst das von diesem Medium gestreute Licht auf den Boden des Behältnisses trifft. Damit würde die Wegnahme dieses Zwischenmediums dazu führen, dass die zweite Beleuchtungseinrichtung den Boden des Behältnisses nicht mehr beleuchtet.

Durch diese indirekte Beleuchtung kann auf besonders vorteilhafte Weise diffuses Licht erzeugt werden, welches dann auf den Boden des Behältnisses trifft. Die erste Beleuchtungseinrichtung beleuchtet den Boden des Behältnisses mit wenigstens teilweise gerichteter Strahlung und damit gerade nicht mit vollständig diffusen Licht.

Die Inspektionsvorrichtung weist eine Streueinrichtung auf, die von der zweiten Beleuchtungseinrichtung beleuchtet wird, wobei das von dieser Streueinrichtung gestreute Licht wenigstens teilweise auf den Boden des Behältnisses trifft.

Vorteilhaft ist die zweite Beleuchtungseinrichtung, d.h. die Beleuchtungseinrichtung, die den Boden des Behältnisses indirekt beleuchtet, zwischen der Streueinrichtung und dem Boden des Behältnisses angeordnet. Auf diese Weise kann in besonders vorteilhafter Weise erreicht werden, dass nur Streulicht von der Streueinrichtung den Boden des Behältnisses trifft, nicht aber eine direkte Beleuchtung von der zweiten Beleuchtungseinrichtung. In diesem Fall kann die Strahlungsrichtung der zweiten Beleuchtungseinrichtung abgewandt von dem Boden des Behältnisses sein. Bei einer weiteren bevorzugten Ausführungsform strahlt die Beleuchtungseinrichtung weißes Licht aus. Dazu kann einerseits eine Vielzahl weißer Leuchtdioden verwendet werden, besonders bevorzugt werden jedoch eine Vielzahl von roten, blauen und grünen Leuchtdioden verwendet, die in ihrer Gesamtheit wiederum Licht ausstrahlen, welches weißem Licht angenähert ist.

Bei einer weiteren bevorzugten Ausführungsform beleuchtet die zweite Beleuchtungseinrichtung die Streueinrichtung divergent beziehungsweise aufgeweitet. Mit anderen Worten wird das Licht der zweiten Beleuchtungseinrichtung aufgeweitet und beleuchtet damit die Streueinrichtung großflächig. Bei einer weiteren bevorzugten Ausführungsform ist zwischen der ersten Beleuchtungseinrichtung und dem Boden des Behältnisses die Streueinrichtung angeordnet. Dies bedeutet, dass die erste Beleuchtungseinrichtung durch die Streueinrichtung hindurch den Boden des Behältnisses beleuchtet und diesen damit direkt beleuchtet. Vorzugsweise erzeugt die erste Beleuchtungseinrichtung einen Lichtpunkt auf der Streueinrichtung um auf diese Weise zu gewährleisten, dass gerichtete Strahlung oder nur schwach diffuses Licht auf den Boden des Behältnisses auftrifft. Denkbar wäre ferner eine kleine Öffnung in der Steuereinrichtung für einen freien, ungestreuten Lichtdurchtritt für das gerichtete Licht der ersten Beleuchtungseinrichtung.

Vorzugsweise ist zwischen den Beleuchtungseinrichtungen und dem Boden des Behältnisses eine Linseneinrichtung angeordnet, um ein Bild auf die Beobachtungseinrichtung zu projizieren. Dabei kann es sich insbesondere um eine Fresnel-Linse handeln.

Erfindunsgemäß ist eine Trennungseinrichtung vorgesehen, welche bewirkt, dass das Licht der ersten Beleuchtungseinrichtung, welches von der Bildaufnahmeeinrichtung aufgenommen wurde und das Licht der zweiten Beleuchtungseinrichtung, welches von der Bildaufnahmeeinrichtung aufgenommen wurde, voneinander im Wesentlichen vollständig getrennt oder trennbar sind. Neben dem Begriff Bildaufnahmeeinrichtung wird im Folgenden auch der Begriff Kamera verwendet.

Durch diese Ausführung wird erreicht, dass mit einer Inspektionsvorrichtung zwei verschiedene optische Messverfahren durchgeführt und damit Bauraum und Zeit eingespart werden können, bzw. bei gleichem Raum- und Zeitbedarf eine umfangreichere Inspektion durchführbar ist. Unter einer vollständigen Trennbarkeit der Lichter wird verstanden, dass die Bildaufnahmeeinrichtung Signale ausgeben kann, die nur von dem Licht aus der ersten Beleuchtungseinrichtung beeinflusst werden und solche Signale, die nur von dem Licht aus der zweiten Beleuchtungseinrichtung beeinflusst werden. Die Trennung der beiden Lichtarten kann in unterschiedlichster Weise erfolgen, wie unten genauer erläutert wird.

Erfindungsgemäß weist die Trennungseinrichtung eine Steuerungseinrichtung auf, die bewirkt, dass das Licht der ersten Beleuchtungseinrichtung und das Licht der zweiten Beleuchtungseinrichtung wenigstens teilweise zeitlich versetzt auf den Boden des Behältnisses treffen. Bei dieser Ausführungsform wird eine Trennung der beiden Lichter bzw. Beleuchtungen über deren zeitlichen Versatz erreicht, d.h. die wenigstens eine Kamera registriert die beiden Beleuchtungen zeitlich versetzt. Vorzugsweise werden die beiden Lichter vollständig zeitlich versetzt, d.h. ohne zeitliche Überschneidungen, auf den Boden des Behältnisses und damit auf die Bildaufnahmeeinrichtung gerichtet.

Bei einer weiteren bevorzugten Ausführungsform richten die beiden Beleuchtungseinrichtungen Licht unterschiedlicher Wellenlängen auf den Boden des Behältnisses und die Trennungseinrichtung bewirkt, dass das Licht der ersten Wellenlänge, welches von der Bildaufnahmeeinrichtung aufgenommen wurde, und das Licht der zweiten Wellenlänge, welches von der Bildaufnahmeeinrichtung aufgenommen wurde, voneinander im Wesentlichen trennbar sind. Gleiches ist für unterschiedlich polarisiertes Licht (z. B. linear oder zirkular polarisiert) denkbar.

Auch hier sind unterschiedliche bevorzugte Ausführungsformen von Trennungseinrichtungen denkbar. So wäre es denkbar, dass Filter oder Spiegel vorgesehen sind, die das Licht der einen Wellenlänge passieren lassen und das Licht der anderen Wellenlänge reflektieren und beispielsweise auf eine zweite Kamera richten. Dabei sind Spiegelsysteme bekannt, die eine im Wesentlichen vollständige Trennung von Licht unterschiedlicher Wellenlängen erlauben. Daneben kann eine Trennung auch durch die Kamera selbst ausgeführt werden, indem beispielsweise eine Farbkamera vorgesehen wird, die das aufgenommene Bild in zwei Bilder mit unterschiedlichen Farbanteilen spaltet.

Daneben kann eine Trennung der Lichtquellen Vorzugsweise auch über andere Maßnahmen wie beispielsweise eine Trennung unterschiedlicher Polarisationsrichtungen erfolgen. Bevorzugt erfolgt diese Trennung jedoch, nachdem das Licht bereits den Behältnisboden durchlaufen hat.

Damit unterscheiden sich die beiden von den beiden Beleuchtungseinrichtungen ausgesendeten Lichter ungeachtet evtl. verschiedener Wellenlängen wenigstens in einer Eigenschaft. Beispielweise handelt es sich bei dem einen Licht um diffuses Licht und bei dem anderen Licht um stärker gerichtete beziehungsweise weniger diffuse Strahlung. Wie eingangs erwähnt, können durch diese unterschiedlichen Beleuchtungsarten unterschiedliche Charakteristika des Behältnisses untersucht werden. Im Einzelnen ist es möglich, durch gerichtete Strahlung die Bodenqualität des Behältnisses zu untersuchen. So ist es beispielsweise möglich, die charakteristischen Materialverteilungen im Boden des Behältnisses zu vermessen und daraus charakteristische Kennzahlen wie beispielsweise die Flächengrößen eines unverstreckt und oder nur leicht verstreckt gebliebenen Bereiches am Boden des Behältnisses bzw. die Größe und Lage eines Übergangsbereichs zwischen einem unverstreckten und einem verstreckten Bereich zu ermitteln. Damit kann durch die Verwendung des gerichteten Lichts auf einfache Weise ein Parameter bereitgestellt werden, der sehr aussagekräftig für die Qualität des Streckblasvorgangs bzw. die Qualität des streckgeblasenen Kunststoffbehälters ist.

Beim Verstrecken des Bodens eines Kunststoffbehälters entstehen je nach der Prozesssteuerung unterschiedliche charakteristische Materialverteilungen im Boden. Diese Inhomogenitäten können mit der erfindungsgemäßen gerichteten Beleuchtung hervorgehoben und mit elektronischer Kameratechnik aufgenommen werden. Falls beispielsweise die Innen- und die Außenwandung im Behältnisboden nicht zueinander parallel sind, da beispielsweise Materialwölbungen oder Inohomogenitäten auftreten, tritt zwischen der Innenwandung und der Außenwandung ein Keilwinkel auf. Dadurch wird das gerichtete Licht durch Brechung abgelenkt und gelangt nicht zur Kamera, wodurch derartige Bereiche auf dem Kamerabild dunkler erscheinen.

Bei einer weiteren bevorzugten Ausführungsform kann anstelle von oder neben gerichtetem Licht polarisiertes Licht verwendet werden, um beispielsweise eine Erkennung von Materialspannungen durchzuführen. Daneben können auch im Fall durchgefärbter Behältermaterialien Inohomogenitäten durch die Absorption von Licht im sichtbaren Wellenbereich deutlich gemacht werden. Daher erfolgt eine Erkennung der Absorption von sichtbarem Licht durch durchgefärbtes Kunststoffmaterial.

Die zweite Beleuchtungseinrichtung, sendet über die Streueinrichtung, bevorzugt diffuses bzw. ungerichtetes Licht aus. Mit dieser Lichtart kann beispielsweise der Boden untersucht werden, um beispielsweise den geometrischen Ort eines Anspritzpunktes zu vermessen. In einer weiteren bevorzugten Ausführungsform ist wenigstens eine Beleuchtungseinrichtung in Längsrichtung des Behältnisses unterhalb des Behältnisses angeordnet. Die Bildaufnahmeeinrichtung ist vorteilhafterweise eine Kamera mit Objektiv und besonders bevorzugt oberhalb der Flasche angeordnet. Das heißt, bei dieser Ausführungsform wird der Boden des Behältnisses im Durchlichtverfahren inspiziert. Durch die Anordnung einer Beleuchtungseinrichtung und besonders bevorzugt der ersten Beleuchtungseinrichtung in Längsrichtung des Behältnisses unterhalb desselben wird eine direkte Beleuchtung des Bodens ohne weitere Elemente wie Spiegel durch die erste Beleuchtungseinrichtung möglich.

Vorzugsweise sind beide Beleuchtungseinrichtungen derart angeordnet, dass das von ihnen ausgesandte Licht im Wesentlichen in der Längsrichtung auf den Boden des Behältnisses trifft. Damit sind die von den beiden Beleuchtungseinrichtungen ausgehenden Lichter bzw. die auf den Boden des Behältnisses auftreffenden Strahlengänge bevorzugt koaxial zueinander. Genau genommen trifft das Licht der zweiten Beleuchtungseinrichtung, welches von der Streueinrichtung gestreut wird, nicht mit einer einheitlichen Strahlungsrichtung auf den Boden des Behältnisses auf. Vielmehr sind die einzelnen Richtungen statistisch verteilt. Im Mittel ergibt sich jedoch wiederum eine Bestrahlungsrichtung, die annähernd in der Längsrichtung des Behältnisses verläuft. Dazu wird bevorzugt die Fläche, die von der Streueinrichtung durch die zweite Beleuchtungseinrichtung beleuchtet wird, konzentrisch bezüglich der Fläche des Bodens des Behältnisses gewählt. Dabei ist es möglich, das Licht der zweiten Beleuchtungsquelle beispielsweise durch einen Umlenkspiegel derart umzulenken, dass es im Wesentlichen in Längsrichtung auf den Boden des Behältnisses trifft. Durch die erfindungsgemäße Vorrichtung kann in Kombination eine Überprüfung von Behältnissen, insbesondere der PET-Bodenqualität und der herkömmlichen PET-Bodeninspektion durch diffuses Licht in einer Station erfolgen. Damit ist ein kompakter Aufbau möglich, ohne dass die Inspektionsmöglichkeiten eingeschränkt werden.

Für die genannte Bodeninspektion wird, wie erwähnt, vorzugsweise eine diffuse bzw. weiche Beleuchtung des Behältnisbodens von unten verwandt, damit einerseits der Anspritzpunkt exakt vermessen werden kann und andererseits kleine opake Einschlüsse und weißkristalline Bereiche sichtbar gemacht werden können. Wie oben erwähnt, können andererseits kleinere Unebenheiten und Wanddickenschwankungen bei der Verwendung der zweiten Beleuchtungseinrichtung unterdrückt werden. Die Messung der PET-Bodenqualität basiert dagegen auf einer stärker gerichteten bzw. harten Beleuchtung des Bodens von unten.

Vorzugsweise weist die Inspektionsvorrichtung wenigstens eine Auswerteeinrichtung auf, die eine Relativposition von mindestens einem Bereich einer Wandung des Behältnisses bezüglich eines Anspritzpunktes des Behältnisses ermittelt. Diese Auswerteinrichtung verwendet damit Daten, die sich aus der Beleuchtung mit diffusem Licht ergeben.

Vorzugsweise bewirkt die Steuerungseinrichtung, dass das Licht der ersten Beleuchtungseinrichtung und das Licht der zweiten Beleuchtungseinrichtung um zwischen 200 µs und 1.500 µs, bevorzugt um zwischen 200 µs und 1.000 µs und besonders bevorzugt um zwischen 300 µs und 600 µs gegeneinander versetzt sind. Ein typischer Wert dieser zeitlichen Versetzung ist bis zu 500 µs. Durch diese zeitlich geringfügig versetzte Ansteuerung der Beleuchtungseinrichtungen kann der Behältnisboden innerhalb eines vergleichsweise kurzen Zeitfensters von etwa 1 ms beleuchtet werden. In jedem Fall wird durch den zeitlichen Versatz der Beleuchtungen erreicht, dass sich die Aufnahmen der beiden Lichtquellen nicht oder nur geringfügig gegenseitig beeinflussen. Damit handelt es sich vorzugsweise bei beiden Beleuchtungseinrichtungen um gepulste Lichtquellen beispielsweise pulsabstrahlende Leuchtdioden.

Bei der Bildaufnahmeeinrichtung handelt es sich vorteilhaft um eine doppelbelichtungsfähige Kamera, d.h. eine Kamera, die innerhalb sehr kurzer Zeitabstände zwei Bilder ausgeben kann.

Bei einer weiteren besonders bevorzugten Ausführungsform weist die Inspektionsvorrichtung eine zweite Bildaufnahmeeinrichtung auf. Damit sind vorzugsweise zwei getrennte Kameras vorgesehen. Dabei ist es wiederum möglich, in einem Strahlengang zwischen dem Behältnis und den Kameras einen Strahlteiler wie beispielsweise einen teildurchlässigen Spiegel vorzusehen. Auch könnte ein strahlteilendes Doppelobjektiv vorgesehen sein. Die Führung der Behältnisse und die einzelnen Aufnahmen erfolgen ansonsten wie bei aus dem Stand der Technik bekannten Inspektionseinrichtungen. Vorzugsweise strahlen die Beleuchtungseinrichtungen sichtbares Licht und insbesondere sichtbares Licht unterschiedlicher Wellenlänge ab. Damit kann eine Trennung der beiden Beleuchtungen auch über zusätzliche Filter wie RG - Filter oder dergleichen vorgenommen werden. Es ist jedoch auch möglich, dass eine Beleuchtungseinrichtung oder auch beide Beleuchtungseinrichtungen weißes Licht abgeben. Besonders bevorzugt weisen die Beleuchtungseinrichtungen weiße LED's als Lichtquellen auf oder LED's unterschiedlicher Farbe, um so weißes Licht zu erzeugen.

Bei einer weiteren bevorzugten Ausführungsform weist die erste Beleuchtungseinrichtung eine Punktlichtquelle auf. Diese kann beispielsweise mit Hilfe eines Reflektors gerichtetes Licht, das heißt Licht mit im Wesentlichen parallelen Lichtstrahlen, aussenden. Daneben können jedoch zum Richten des Lichts auch optische Elemente wie Linsen oder dergleichen verwendet werden. Vorzugsweise weist die zweite Beleuchtungseinrichtung eine Vielzahl von Lichtquellen auf. In diesem Falle wird besonders bevorzugt eine großflächige Beleuchtung eingesetzt, beispielsweise in Form einer Vielzahl von Leuchtdioden, die in einem Array angeordnet sind.

Die vorliegende Erfindung ist weiterhin auf eine Streckblasmaschine mit einer Inspektionsvorrichtung der oben beschriebenen Art gerichtet, wobei die Inspektionsvorrichtung bevorzugt in den Auslaufbereich der Maschine integriert ist, beispielsweise an der Peripherie eines Auslaufsternrades.

Die Erfindung ist weiterhin auf ein Verfahren zum Inspizieren von transparenten oder semitransparenten Behältnissen und insbesondere von streckgeblasenen

Kunststoffbehältern durch optische Inspektion des Bodens der Behältnisse gerichtet. Dabei wird in einem ersten Verfahrensschritt der Boden des Behältnisses durch eine erste Beleuchtungseinrichtung mittels Licht mit ersten charakteristischen Eigenschaften beleuchtet. Weiterhin wird der Boden des Behältnisses durch eine zweite Beleuchtungseinrichtung mit Licht mit zweiten charakteristischen Eigenschaften, welche sich von den ersten charakteristischen Eigenschaften unterscheiden, beleuchtet. Weiterhin wird wenigstens ein Anteil des auf den Boden des Behältnisses gerichteten Lichts beider Beleuchtungseinrichtung mit wenigstens einer Bildaufnahmeeinrichtung aufgenommen. Erfindungsgemäß wird der Boden des Behältnisses von der zweiten Beleuchtungseinrichtung indirekt derart beleuchtet, dass das Licht von der zweiten Beleuchtungseinrichtung nicht mit einem geradlinigen Strahlengang auf den Boden des Behältnisses trifft. Es ist dabei eine Streueinrichtung vorgesehen, die von der zweiten Beleuchtungseinrichtung beleuchtet wird und die wiederum gestreutes Licht auf den Boden des Behältnisses wirft. Vorzugsweise ist auch hier die zweite Beleuchtungseinrichtung zwischen der Streueinrichtung und dem Boden des Behältnisses angeordnet.

Erfindungsgemäß werden das Licht der ersten Beleuchtungseinrichtung, welches von der Bildaufnahmeeinrichtung aufgenommen wurde, und das Licht der zweiten Beleuchtungseinrichtung, welches von Bildaufnahmeeinrichtung aufgenommen wurde, voneinander im Wesentlichen vollständig getrennt.

Erfindungsgemäß werden das Licht der ersten Beleuchtungseinrichtung und das Licht der zweiten Beleuchtungseinrichtung zeitlich versetzt zueinander auf den Boden des Behältnisses gerichtet. Durch diesen zeitlichen Versatz ist es ebenso möglich, zwei unterschiedliche Messmethoden in relativer kurzer Zeit und damit innerhalb der relativ kurzen Zeit, die für das Inspektionsverfahren zur Verfügung steht, durchzuführen.

Bei einem weiteren bevorzugten Verfahren richten die Beleuchtungseinrichtungen Licht unterschiedlicher Wellenlängen auf den Boden des Behältnisses und das Licht einer ersten Wellenlänge, welches von der Bildaufnahmeeinrichtung aufgenommen wurde, sowie das Licht, welches von der zweiten Bildaufnahmeeinrichtung aufgenommen wurde, werden im Wesentlichen vollständig voneinander getrennt.

Vorzugsweise werden mit Bildverarbeitungsalgorhithmen aus den aufgenommenen Bildern Qualitätsmerkmale des Behältnisses abgeleitet, wobei insbesondere ortsauflösende elektronische CCD-Kameras zur Bildaufnahme verwendet werden. Vorzugsweise beleuchtet die Beleuchtung den Boden des Behältnisses und die Bildaufnahmeeinrichtung blickt durch die Mündungsöffnung des Behältnisses auf dessen Boden, so dass ein Durchlichtverfahren realisiert wird.

Besonders vorteilhaft wird durch die Verwendung des Lichts mit den ersten charakteristischen Eigenschaften die Flächengröße eines unverstreckten bzw. nur leicht verstreckten Gesamtbereichs oder eines ausgewählten unvollstreckten oder nur leicht vollstreckten Teilbereichs am Boden des Behältnisses ermittelt. Durch die Aufnahme werden Qualitätsmerkmale des Behältnisses abgeleitet und besonders bevorzugt mit vordefinierten Grenzwerten verglichen und bei

Überschreitung der Grenzwerte eine Ausleitung der beanstandeten Behälter veranlasst. Vorzugsweise wird als Licht sichtbares Licht verwendet. Es ist jedoch auch möglich, andere Lichterarten wie infrarotes oder ultraviolettes Licht oder Kombinationen hieraus zu verwenden.

Vorzugsweise durchläuft das Licht nach dem Passieren des Bodens eine Strahlungsteileinrichtung. Damit können das Licht mit den ersten charakteristischen Eigenschaften und das Licht mit den zweiten charakteristischen Eigenschaften voneinander getrennt werden. Daneben kann das Licht auf diese Weise auch in zwei Anteile (mit jeweils den gleichen charakteristischen Eigenschaften) aufgespalten und auf zwei Kameras gegeben werden.

Weitere Vorteile und bevorzugte Ausführungsformen ergeben sich aus der beigefügten Figur. Dabei zeigt:

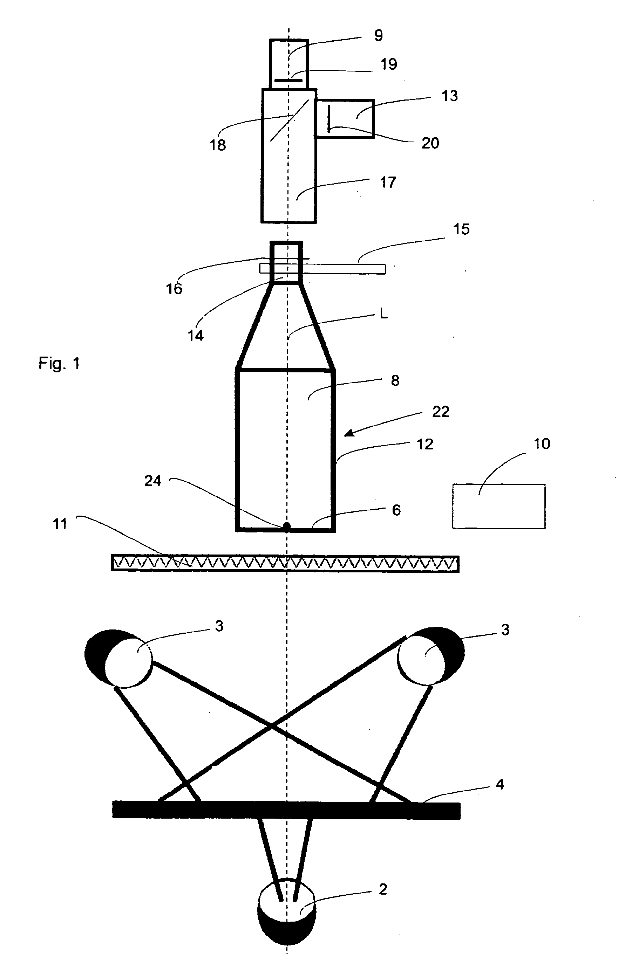

Fig. 1 Eine schematische Darstellung einer bevorzugten Ausführungsform der erfindungsgemäßen Inspektionsvorrichtung.

Fig. 1 zeigt eine bevorzugte Ausführungsform der erfindungsgemäßen Inspektionsvorrichtung zum Inspizieren eines Behältnisses 8. Dieses Behältnis (beispielsweise eine transparente Kunststoffflasche aus PET) wird dabei von einer sog. Neckhandlungsklammer 15 geführt. Das Behältnis 8 ist im Wesentlichen rotationssymmetrisch zu einer Längsachse L ausgebildet. Die Wandung 12 des Behältnisses 8 weist einen mit einem Außengewinde versehenen Mündungsbereich 14 mit einem (nicht näher gezeigten) seitlich überstehenden Tragring 16 auf. Unterhalb des Tragrings 16 ist ein seitlich überstehender im Wesentlichen zylinderförmiger Bauchbereich 22 vorgesehen, der den größten Außendurchmesser des Behältnisses 8 bildet. Dieser Bauchbereich 22 mündet in einen Boden 6, der als Standfuß ausgebildet ist. An der Außenseite des Bodens befindet sich ein im Normalfall zentrischer Anspritzpunkt 24.

Unterhalb des Bodens beziehungsweise des Behältnisses 8 sind zwei Beleuchtungseinrichtungen 2 und 3 vorgesehen. Dabei handelt es sich bei der zweiten Beleuchtungseinrichtung 3 um eine großflächige Beleuchtung, die beispielsweise eine Vielzahl von Leuchtdioden auf einer umfänglichen Fläche aufweisen kann. Weiterhin könnte auch ein bevorzugt konisch ausgebildeter Ring von Beleuchtungseinrichtungen vorgesehen sein. Das Licht der Beleuchtungseinrichtung 3 wird auf eine Streueinrichtung 4, bei der es sich beispielsweise um eine Mattscheibe beziehungsweise Milchglasscheibe handeln kann, gestrahlt. Dabei wird das Licht der Beleuchtungseinrichtung 3 aufgeweitet, um eine großflächige Beleuchtung der Streueinrichtung 4 zu erreichen. Das von der Streueinrichtung 4 gestreute Licht gelangt über eine Linseneinrichtung 11 auf den Boden des Behältnisses. Damit gelangt jedoch kein Licht direkt, d.h. ohne die Streueinrichtung 4 von der Beleuchtungseinrichtung 3 auf den Boden des Behältnisses.

Das Bezugszeichen 2 kennzeichnet die erste Beleuchtungseinrichtung, bei der es sich beispielsweise um eine LED-Spotlampe (zur Untersuchung der PET-Bodenqualität) handeln kann. Diese Beleuchtungseinrichtung 2 beleuchtet punkt- oder spotartig die Streueinrichtung 4 und erzeugt damit stärker gerichtetes Licht, welches auf den Boden 6 des Behältnisses 8 gelangt. Damit erzeugt die Beleuchtungseinrichtung 2 von unten einen kleinen Spot in der Mitte der Streueinrichtung. Dadurch wird ein sehr hartes Licht erzeugt. Durch einen variablen Abstand der Beleuchtungseinrichtung 2 von der Streueinrichtung 4 kann die Spotgröße und damit die Härte des Lichts verändert werden. So kann der optimale Bildkontrast für die Bodenqualität eingestellt werden.

Durch die Beleuchtung der Streueinrichtung 4 von oben mittels der Beleuchtungseinrichtung 3 wird ein wesentlich weicheres Licht für die normale Bodenkontrolle erzeugt. Auch dieses Licht ist variabel. Bevorzugt kann auf die Streueinrichtung eine großflächige Blende gelegt werden, welche damit die Größe der Leuchtfläche reduziert und damit etwas härteres Licht ermöglicht. Da jedoch in diesem Falls weiches Licht benötigt wird, wird bevorzugt das Loch in dieser Blende stets so groß gewählt werden, dass es die erste Beleuchtung von unten nicht beeinflusst.

So kann eine Kombination von zwei unterschiedlich harten Beleuchtungen an der gleichen Stelle des Bodens erhalten werden, die zudem noch unabhängig voneinander feinabstimmbar sind.

Bei einer weiteren vorteilhaften Variante kann die Beleuchtung der Streueinrichtung 4 noch strukturiert werden. Zum Beispiel erzeugt ein leuchtender Ring quasi ein negatives Bild oder eine asymmetrische Lichtverteilung erzeugt Bilder mit 3-D-Wirkung.

Die Linseneinrichtung 11, z. B. Fresnel-Linse, bildet die Mitte der Streueinrichtung 4 auf das Kameraobjektiv ab. Diese Streueinrichtung wird nun von den zwei oben beschriebenen Beleuchtungseinrichtungen kurz hintereinander angestrahlt.

Eine Steuerungseinrichtung 10 bewirkt, dass die beiden Beleuchtungseinrichtungen 2 und 3 ihr Licht jeweils zeitlich versetzt zueinander aussenden. Oberhalb des Behältnisses 8 sind zwei Bildaufnahmeeinrichtungen 9 und 13 in Form zweier Kameras, welche bevorzugt CCD-Chips aufweisen, vorgesehen. Vorzugsweise sind die Kameras zur Ausgabe von Farbbildern ausgelegt. In diesem Fall ist ein Strahlteiler 18 vorgesehen, der bewirkt, dass beide Kameras 9, 13 beleuchtet werden. Bevorzugt ist der Strahlteiler so ausgelegt, dass das Licht einer Beleuchtungseinrichtung 2,3 auf eine Kamera 9,13 gelangt und das Licht der anderen Beleuchtungseinrichtung 3,2 auf die andere Kamera 13,9. Bei dieser Ausführungsform werden vorteilhaft jeweils die Beleuchtungseinrichtungen 2, 3 und die diesen zugeordneten Kameras 9, 13 miteinander synchronisiert.

Das Bezugszeichen 17 bezieht sich auf ein Kombiobjektiv bzw. Doppelobjektiv mit dem darin angeordneten Strahlteiler 18. Die Steuerungseinrichtung kann auch bewirken, dass die Beleuchtungen und die Kameras geringfügig zeitlich versetzt angesteuert werden und damit zwei unterschiedliche Aufnahmen an fast derselben Behälterposition ohne gegenseitige Beeinflussung erfolgen können. Damit können insgesamt innerhalb eines vergleichsweise kurzen Zeitfensters zwei Aufnahmen mit unterschiedlichen Lichtarten durchgeführt werden und damit das Behältnis auf wenigstens zwei unterschiedliche Kriterien hin untersucht werden.

Für die erfindungsgemäße Inspektionsvorrichtung ist im Wesentlichen nicht mehr Bauraum bzw. Platz nötig als für entsprechende Inspektionsvorrichtungen aus dem Stand der Technik. Damit können ohne zeitliche Verluste oder weiteren Platzbedarf durch die erfindungsgemäße Inspektionsvorrichtung mehrere Inspektionsaufgaben durchgeführt werden.

Die Bezugszeichen 19 und 20 beziehen sich auf Filter, die jeweils in den Strahlengängen zwischen dem Strahlteiler 18 und den Kameras 9, 13 angeordnet sein können, um Licht unterschiedlicher Wellenlängen zu trennen.

## Patentansprüche

1. Inspektionsvorrichtung für transparente oder
semitransparente Behältnisse (8), mit einer ersten Beleuchtungseinrichtung (2), die Licht mit ersten charakteristischen Eigenschaften auf den Boden (6) des Behältnisses (8) richtet, einer zweiten Beleuchtungseinrichtung (3), welche Licht mit zweiten charakteristischen Eigenschaften, welche sich wenigstens teilweise von den ersten charakteristischen Eigenschaften unterscheiden, auf den Boden (6) des Behältnisses (8) richtet und wenigstens einer Bildaufnahmeeinrichtung (9),
die wenigstens einen Anteil des auf den Boden (6) des Behältnisses (8) gerichteten und von diesem
transmittierten Lichts aufnimmt, wobei die zweite Beleuchtungseinrichtung (3) den Boden (6) des Behältnisses (8) indirekt derart beleuchtet, dass das Licht von der zweiten Beleuchtungseinrichtung (3) nicht mit einem geradlinigen Strahlengang auf den Boden (6) des Behältnisses (8) trifft, **dadurch gekennzeichnet, dass** die Inspektionsvorrichtung eine Streueinrichtung (4) aufweist, die von der zweiten Beleuchtungseinrichtung (3) beleuchtet wird, wobei das von dieser Streueinrichtung (4) gestreute Licht wenigstens teilweise auf den Boden (6) des Behältnisses (8) trifft wobei eine Trennungseinrichtung (10) vorgesehen ist, welche bewirkt, dass das Licht der ersten Beleuchtungseinrichtung (2), welches von der Bildaufnahmeeinrichtung (9) aufgenommen wurde und das Licht der zweiten Beleuchtungseinrichtung (3), welches von der Bildaufnahmeeinrichtung (9) aufgenommen wurde, voneinander im Wesentlichen vollständig getrennt oder trennbar sind und die Trennungseinrichtung (10) eine Steuerungseinrichtun aufweist, die bewirkt, dass das Licht der ersten Beleuchtungseinrichtung (2) und das Licht der zweiten Beleuchtungseinrichtung (3) wenigstens teilweise zeitlich versetzt auf den Boden (6) des Behältnisses (8) treffen.

2. Inspektionsvorrichtung nach Anspruch 1, **dadurch gekennzeichnet, dass** die zweite Beleuchtungseinrichtung (3)
zwischen der Streueinrichtung (4) und dem Boden (6) des Behältnisses (8) angeordnet ist.

3. Inspektionsvorrichtung nach Anspruch 2,
**dadurch gekennzeichnet, dass** die Beleuchtungseinrichtung (3) die Streueinrichtung (4) divergent beleuchtet.

4. Inspektionsvorrichtung nach wenigstens einem der
vorangegangenen Ansprüche 2 - 3, **dadurch gekennzeichnet, dass** die Streueinrichtung (4) zwischen der ersten Beleuchtungseinrichtung (2) und dem Boden (6) des Behältnisses (8) angeordnet ist.

5. Inspektionsvorrichtung nach Anspruch 1, **dadurch gekennzeichnet, dass** das Licht mit den ersten charakteristischen Eigenschaften und das Licht mit den zweiten charakteristischen Eigenschaften zusätzlich zu den unterschiedlichen Eigenschaften unterschiedliche Wellenlängen aufweisen, wobei die Trennungseinrichtung (10) bewirkt, dass das Licht einer ersten Wellenlänge, welches von der Bildaufnahmeeinrichtung (9) aufgenommen wurde, und das Licht einer zweiten Wellenlänge, welches von der Bildaufnahmeeinrichtung (9) aufgenommen wurde, voneinander im Wesentlichen vollständig trennbar sind.

6. Inspektionsvorrichtung nach Anspruch 1, **dadurch gekennzeichnet, dass** die erste Beleuchtungseinrichtung (2) stärker gerichtete Strahlung und die zweite Beleuchtungseinrichtung (3) diffuses Licht aussendet.

7. Inspektionsvorrichtung nach Anspruch 1, **dadurch gekennzeichnet, dass** wenigstens eine Beleuchtungseinrichtung (2,3) in einer Längsrichtung (L) des Behältnisses (8) unterhalb des Behältnisses (8) angeordnet ist.

8. Inspektionsvorrichtung nach wenigstens einem der vorangegangenen Ansprüche, **dadurch gekennzeichnet, dass** beide Beleuchtungseinrichtungen (2, 3) derart angeordnet sind, dass das von Ihnen ausgesandte Licht jeweils im Wesentlichen in einer Längsrichtung (L) auf den Boden (8) des Behältnisses (8) trifft.

9. Inspektionsvorrichtung nach wenigstens einem der vorangegangenen Anspruch, **dadurch gekennzeichnet, dass** die Inspektionsvorrichtung eine zweite Bildaufnahmeeinrichtung (13) aufweist.

10. Streckblasmaschine mit einer Inspektionsvorrichtung nach wenigstens einem der vorangegangenen Ansprüche.

11. Verfahren zum Inspizieren von transparenten oder semitransparenten Behältnissen (8) und insbesondere von streckgeblasenen Kunststoffbehältern (8) durch optische Inspektion des Bodens (6) des Behältnisses (8) mit den Schritten:
- Beleuchtung des Bodens (6) des Behältnisses (8) durch eine erste Beleuchtungseinrichtung (2) mittels Licht mit ersten charakteristischen Eigenschaften ;
- Beleuchtung des Bodens (6) des Behältnisses (8) durch eine zweite Beleuchtungseinrichtung (3) mit Licht mit zweiten charakteristischen Eigenschaften, welche sich von den ersten charakteristischen Eigenschaften unterscheiden;
- Aufnahme wenigstens eines Anteils des auf den Boden (6) des Behältnisses (8) gerichteten Lichts beider Beleuchtungseinrichtungen (2, 3) mit wenigstens einer Bildaufnahmeeinrichtung (9); wobei der Boden (6) des Behältnisses (8) von der zweiten Beleuchtungseinrichtung (3) indirekt derart beleuchtet wird, dass das Licht von der zweiten Beleuchtungseinrichtung (3) nicht mit einem geradlinigen Strahlengang auf den Boden (6) des Behältnisses (8) trifft, **dadurch gekennzeichnet, dass** die Inspektionsvorrichtung eine Streueinrichtung (4) aufweist, die von der zweiten Beleuchtungseinrichtung (3) beleuchtet wird, wobei das von dieser Streueinrichtung (4) gestreute Licht wenigstens teilweise auf den Boden (6) des Behältnisses (8) trifft, wobei das Licht der ersten Beleuchtungseinrichtung (2), welches von der Bildaufnahmeeinrichtung (9) aufgenommen wurde und das Licht der zweiten Beleuchtungseinrichtung (3), welches von der Bildaufnahmeeinrichtung (9) aufgenommen wurde, voneinander im Wesentlichen vollständig getrennt werden, wobei das Licht der ersten Beleuchtungseinrichtung (2) und das Licht der zweiten Beleuchtungseinrichtung (3) zeitlich versetzt zueinander auf den Boden (6) des Behältnisses (8) gerichtet werden.

## Claims

1. Inspection apparatus for transparent or semi-transparent containers (8), comprising a first illumination device (2) which directs light having first characteristic properties onto the base (6) of the container (8), a second illumination device (3) which directs light having second characteristic properties, which differ at least partially from the first characteristic properties, onto the base (6) of the container (8), and at least one image recording device (9) which receives at least a portion of the light directed onto the base (6) of the container (8) and transmitted by the latter, wherein the second illumination device (3) illuminates the base (6) of the container (8) indirectly in such a way that the light of the second illumination device (3) does not hit the base (6) of the container (8) with the path of the rays extending in a linear manner, **characterized in that** the inspection device comprises a scattering device (4) which is illuminated by the second illumination device (3) wherein the light being scattered by this scattering device (4) hits the base (6) of the container (8) at least partially, wherein a separating device (10) is provided which causes the light of the first illumination device (2) which has been received by the image recording device (9) and the light of the second illumination device (3) which has been received by the image recording device (9) to be separated from each other substantially completely or to be separable and the separating device (10) comprises a control device which causes the light of the first illumination device (2) and the light of the second illumination device (3) to hit the base (6) of the container (8) at least partially in a time-staggered manner.

2. Inspection apparatus according to claim 1, **characterised in that** second illumination device is arranged between the scattering device (4) and the base (6) of the container (8).

3. Inspection apparatus according to claim 2, **characterised in that** the illumination device (3) illuminates the scattering device (4) in a divergent manner.

4. Inspection apparatus according to at least one of the preceding claims 2-3, **characterised in that** the scattering device (4) is arranged between the first illumination device (2) and the base (6) of the container (8).

5. Inspection apparatus according to claim 1, **characterised in that** the light having the first characteristic properties and the light having the second characteristic properties have different wavelengths in addition to the different properties, wherein, by means of the separating device (10), the light of a first wavelength which has been received by the image recording device (9) and the light of a second wavelength which has been received by the image recording device (9) can be substantially completely separated from one another.

6. Inspection apparatus according to claim 1, **characterised in that** the first illumination device (2) emits more directional radiation and the second illumination device (3) emits diffuse light.

7. Inspection apparatus according to claim 1, **characterised in that** at least one illumination device (2, 3) is arranged below the container (8) in the longitudinal direction (L) of the container (8).

8. Inspection apparatus according to at least one of the preceding claims, **characterised in that** both illumination devices (2, 3) are arranged in such a way that the light emitted by them impinges in each case substantially in the longitudinal direction (L) on the base (8) of the container (8).

9. Inspection apparatus according to at least one of the preceding claims, **characterised in that** the inspection apparatus comprises a second image recording device (13).

10. Stretch blow-moulding machine comprising an inspection apparatus according to at least one of the preceding claims.

11. Method for inspecting transparent or semi-transparent containers (8) and in particular stretch blow-moulded plastic containers (8) by optical inspection of the base (6) of the container (8), comprising the steps:
- illumination of the base (6) of the container (8) by a first illumination device (2) by means of light having first characteristic properties;
- illumination of the base (6) of the container (8) by a second illumination device (3) by means of light having second characteristic properties which differ from the first characteristic properties;
- receipt of at least a portion of the light directed onto the base (6) of the container (8) from the two illumination devices (2, 3) by at least one image recording device (9); wherein the base (6) of the container (8) is illuminated by the second illumination device (3) in an indirect manner in such a way that the light of the second illumination device (3) does not hit the base (6) of the container (8) with the path of the rays extending in a linear manner, **characterised in that** the inspection device comprises a scattering device (4) which is illuminated by the second illumination device (3) wherein the light being scattered by this scattering device (4) hits the base (6) of the container (8) at least partially wherein the light of the first illumination device (2) which has been received by the image recording device (9) and the light of the second illumination device (3) which has been received by the image recording device (9) are separated from each other substantially completely, wherein the light of the first illumination device (2) and the light of the second illumination device (3) are directed onto the base (6) of the container (8) in a time-staggered manner compared to each other.

## Revendications

1. Dispositif d'inspection pour des récipients (8) transparents ou semi-transparents, comprenant un premier système d'éclairage (2), qui dirige sur le fond (6) du récipient (8) de la lumière présentant des premières caractéristiques, un deuxième système d'éclairage (3), qui dirige sur le fond (6) du récipient (8) de la lumière présentant des deuxièmes caractéristiques différentes au moins en partie des premières caractéristiques, et au moins un système de prise de vues (9), qui absorbe au moins une fraction de la lumière dirigée sur le fond (6) du récipient (8) et transmise par ce dernier, dans lequel le deuxième système d'éclairage (3) éclaire le fond (6) du récipient (8) indirectement de telle manière que la lumière en provenance du deuxième système d'éclairage (3) n'atteint pas avec une trajectoire des rayons rectiligne le fond (6) du récipient (8), **caractérisé en ce que** le dispositif d'inspection présente un système de diffusion (4), qui est éclairé par le deuxième système d'éclairage (3), sachant que la lumière diffusée par ledit système de diffusion (4) atteint au moins en partie le fond (6) du récipient (8), sachant qu'un système de séparation (10) est prévu, lequel a pour effet que la lumière du premier système d'éclairage (2) qui a été absorbée par le système de prise de vues (9), et la lumière du deuxième système d'éclairage (3) qui a été absorbée par le système de prise de vues (9), sont séparées ou peuvent être séparées essentiellement complètement l'une de l'autre, et le système de séparation (10) présente un système de commande ayant pour effet que la lumière du premier système d'éclairage (2) et la lumière du deuxième système d'éclairage (3) atteignent le fond (6) du récipient (8) au moins en partie de manière décalée dans le temps.

2. Dispositif d'inspection selon la revendication 1, **caractérisé en ce que** le deuxième système d'éclairage (3) est disposé entre le système de diffusion (4) et le fond (6) du récipient (8).

3. Dispositif d'inspection selon la revendication 2, **caractérisé en ce que** le système d'éclairage (3) éclaire de manière divergente le système de diffusion (4).

4. Dispositif d'inspection selon au moins l'une quelconque des revendications 2 à 3, **caractérisé en ce que** le système de diffusion (4) est disposé entre le premier système d'éclairage (2) et le fond (6) du récipient (8).

5. Dispositif d'inspection selon la revendication 1, **caractérisé en ce que** la lumière présentant les premières caractéristiques et la lumière présentant les deuxièmes caractéristiques présentent en complément des caractéristiques différentes des longueurs d'ondes différentes, sachant que le système de séparation (10) a pour effet que la lumière d'une première longueur d'onde qui a été absorbée par le système de prise de vues (9), et la lumière d'une deuxième longueur d'onde qui a été absorbée par le système de prise de vues (9), peuvent être séparées essentiellement complètement l'une de l'autre.

6. Dispositif d'inspection selon la revendication 1, **caractérisé en ce que** le premier système d'éclairage (2) émet un rayonnement dirigé plus fortement et le deuxième système d'éclairage (3) une lumière diffuse.

7. Dispositif d'inspection selon la revendication 1, **caractérisé en ce qu'**au moins un système d'éclairage (2, 3) est disposé dans une direction longitudinale (L) du récipient (8) sous le récipient (8).

8. Dispositif d'inspection selon au moins l'une quelconque des revendications précédentes, **caractérisé en ce que** les deux systèmes d'éclairage (2, 3) sont disposés de telle manière que la lumière émise par ces derniers atteint respectivement essentiellement dans une direction longitudinale (L) le fond (6) du récipient (8).

9. Dispositif d'inspection selon au moins l'une quelconque des revendications précédentes, **caractérisé en ce que** le dispositif d'inspection présente un deuxième système de prise de vues (13).

10. Machine de soufflage-étirage comprenant un dispositif d'inspection selon au moins l'une quelconque des revendications précédentes.

11. Procédé pour inspecter des récipients (8) transparents ou semi-transparents et en particulier des récipients en plastique (8) étirés-soufflés grâce à une inspection visuelle du fond (6) du récipient (8), comprenant les étapes:
- éclairer le fond (6) du récipient (8) grâce à un premier système d'éclairage (2) au moyen d'une lumière présentant des premières caractéristiques ;
- éclairer le fond (6) du récipient (8) grâce à un deuxième système d'éclairage (3) au moyen d'une lumière présentant des deuxièmes caractéristiques, lesquelles sont différentes des premières caractéristiques ;
- absorber au moins une fraction de la lumière, dirigée sur le fond (6) du récipient (8), des deux systèmes d'éclairage (2, 3) avec au moins un système de prise de vues (9) ; sachant que le fond (6) du récipient (8) est éclairé par le deuxième système d'éclairage (3) indirectement de telle manière que la lumière en provenance du deuxième système d'éclairage (3) n'atteint pas le fond (6) du récipient (8) avec une trajectoire de rayons rectiligne, **caractérisé en ce que** le dispositif d'inspection présente un système de diffusion (4), qui est éclairé par le deuxième système d'éclairage (3), sachant que la lumière diffusée par ledit système de diffusion (4) atteint au moins en partie le fond (6) du récipient (8), sachant que la lumière du premier système d'éclairage (2) qui a été absorbée par le système de prise de vues (9), et la lumière du deuxième système d'éclairage (3) qui a été absorbée par le système de prise de vues (9), sont séparées essentiellement complètement l'une de l'autre, sachant que la lumière du premier système d'éclairage (2) et la lumière du deuxième système d'éclairage (3) sont dirigées sur le fond (6) du récipient (8) de manière décalée dans le temps l'une par rapport à l'autre.
